# EUROPÄISCHE PATENTSCHRIFT

(11) **EP 0 685 441 B1**
(45) Veröffentlichungstag und Bekanntmachung des Hinweises auf die Patenterteilung: **04.11.1998**
(21) Anmeldenummer: 94108552.4
(22) Anmeldetag: 30.05.1994
(51) Int. Cl.: C05F 17/02

(54) **Vorrichtung zum Kompostieren von Organischen Abfällen**
Composting device for organic wastes
Appareil de compostage pour déchets organiques

(43) Veröffentlichungstag der Anmeldung: 06.12.1995
(73) Patentinhaber: Manka, Christoph, D-53111 Bonn (DE)
(72) Erfinder: Manka, Christoph, D-53111 Bonn (DE)

(56) Entgegenhaltungen:
- EP-A- 0 441 994
- EP-A- 0 495 315
- CH-A- 405 374
- DE-A- 3 626 903

## Beschreibung

Gegenstand der Erfindung ist eine Vorrichtung zur Kompostierung insbesondere von organischen Abfällen aus den Hauswirtschaften. Die Abfälle werden während des Rotteprozesses, in der Vorrichtung zum Kompost verarbeitet, vorwiegend zu einem vollwertigen in hygienischer Hinsicht sicheren Dünger.

Die bekannte Vorrichtung zur Kompostierung von organischen Substanzen wie: Stalldünger, Stroh, Grünfutter so wie Abfälle aus den Hauswirtschaften, Gärten, Landwirtschaftsbetrieben oder der Lebensmittelindustrie.

Gegenstand der vorliegenden Erfindung ist ein querliegender Rottebehalter, der sich um seine Längsachse dreht.

Eine so umschriebene Rottetrommel ist aus EP-0 441-994 A1 bekannt. Diese Rottetrommel besteht aus einen einheitlichen Rotteraum, der ein schraubenähnliches Innenleben, welches zum Transport, vom Anfang zum Ende der Trommel, und zur Vermischung des Eingabegutes dient und eine Vorrichtung zur Be-und Entlüftung besitzt.

Das Positive an dieser Art der behandlung von organischen Material ist die gute Bereitstellung von Sauerstoff, der für den aeroben Zerfall benötigt wird.

Der Nachteil dieser Methode ist der, daß es zu einer kontinuierlichen Vermischung des neu eingebrachten organischen Materials und des in verschiedenen, weiter fortgeschrittenen Rottestadien befindlichen Material kommt. Somit kann keine dem Rottegrad entsprechende spezifische mikrobiologische Fauna und Flora entstehen. Eine Beschleunigung des Rotteverlaufs ist nur bedingt möglich.

Die Losung besteht in der Unterteilung des Rotteraums in Kammern durch perforierte Scheidewände, die eine Vermischung des neu eingebrachten organischen Materials und des in verschiedenen Rottestufen befindlichen Rottegutes verhindern und gleichzeitig ist einen Austausch des Gasförmigen, Sauerstoffreichen Milieus und der mikrobiologischen Fauna und Flora ermöglichen. In jeder Kammer kann sich ein dem Rotte- stadium entsprechendes ideales Milieu entwickeln, welches durch seine Umgebung, Rottegut in anderen Rottestadien, den Bedingungen entsprechend modifiziert werden kann. Eine Beschleunigung des Rotteprozesses ist somit gesichert.

Diese Vorrichtung besteht aus einer Rottetrommel als eine wärmeisolierende Rottekammer, in welcher Leitungen für die Zufuhr von frischem Material und zur Abfuhr des verarbeiteten Materials, des Kompostes, eingeführt sind.

Der Behälter ist ausgestattet mit einer Einrichtung die zur Erwärmung des Beschickung und zur Umwälzung dient.

Der erfindungsgemäße gegenstand der Vorrichtung zur Kompostierung - der Rottebehälter - ist drehbar auf einem Fahrzeug, z.B. einem Kraftfahrzeuganhänger oder Schlepperanhänger, auf einem Sattelauflieger oder einer ähnlichen Transportvorrichtung, angebracht und mit einem Antrieb zur Drehung ausgestattet, das auf diesem Fahrzeug befestigt ist. Der Rottebehälter ist querliegend - senkrecht zu seiner Längsachse, welche zugleich die Drehungsachse darstellt, in Kammern unterteilt, wobei die Unterteilung mittels gelochten Scheidewänden durchgeführt ist. Die Perforation ermöglicht es, daß die Rottebakterien zwischen den Kammern durchdringen, die gasförmigen Bedingungen werden gleichmäßig, wobei die Scheidewänden verhindern, daß die Beschickung nach einem Teil des Behälters verlagert wird, z.B. mangels einer Nivellierung. Jede von den Kammern ist mittels perforierten in Richtung der Längsachse des Rottebehälters konvergierenden Scheidewänden in Unterkammern unterteilt. Jede der Unterkammern hat eine Außenwand, die aus zwei Flügeln bestehen die mit Seitenwänden versehen sind. Jeder der Flügel ist an der einen Seite an die Konstruktion des Rottebehälters drehbar befestigt und auf der entgegengesetzten Seite sind die Flügel miteinander verbunden und gegenseitig mit Hilfe einer lösbaren Verbindung unbeweglich zu machen.

Die Gesamtlänge beider Flügel ist größer als die Entfernung zwischen den Achsen ihrer drehbaren Befestigungen. Die durch so gewählten Flügel gebildeten Weiten, sind durch ihre Seitenwände verdeckt.

Die drehbare Befestigung des Rottebehälters auf einem Fahrzeug, ist insbesondere so ausgeführt, daß der Behälter mit Bahnen umschlungen ist, die auf den mit Konstruktions des Fahrzeugs verbundenen Rollen, gestützt sind.

Der Antrieb der Drehung des Rottebehälters ist zusammengesetzt aus einem den Behälter umgebenen Zahnkranz, welcher in das Zahnrad am Ausgang des Stirnradgetriebes eingreift, welches mit einem Schnecken und Umlaufgetriebe verbunden ist, das sich durch eine große Übersetzung kennzeichnet, und an seinem Eingang mit der Motorwelle verbunden ist.

Es ist vorteilhaft den Zugang zu den einzelnen Unterkammern zu erleichtern in zumindestens einem Flügel, jeder von ihnen eine Einfüll- und Ausladeöffnung auszuführen, die mit einem Deckel versehen ist.

Es ist vorteilhaft, in Hinsicht auf die Ergänzung der Feuchte im Behälter während des Rotteprozeßes, wenn in das Innere des Behälters Wasserrohre eingeführt sind, deren Mündungen an verschiedenen Stellen dem Behälters entlang angeordnet sind. Die Durchlüftung des Rottebehalters bei einem übermäßig hohem Anstieg der Rottetemperatur, und zwar eine schnelle Durchlüftung sichert ein perforiertes Entlüftungsrohr, welches durch alle Kammern des Behälters und koaxial zu dem Behälter verläuft, und nach außen einseitig ausgeführt ist.

Die Vorrichtung zur Kompostierung, insbesondere von organischen Abfällen aus den Hauswirtschaften gemäß der Erfindung ist eine fahrbare Vorrichtung, die wesentlich leichter bei ihrer Benutzung ist als das bei den fest angeordneten Vorrichtungen den Fall ist. Diese Vorrichtung ist darin vorteilhaft, daß sie auf Stellen hingebracht werden kann, wo die Abfälle zwecks Kompostierung in angehäuften Mengen vorliegen, oder die Lieferanten dieser Abfälle eine leichtere Zufahrt haben und die Vorrichtung dort betrieben werden kann.

Die Vorrichtung ist grundsätzlich zur Arbeit im Dauerbetrieb bestimmt mit periodischen teilweisen Entladungen des Kompostes und Beschickung der Ladung, was öfters in Hinsicht auf die Organisation der Arbeit hin günstig ist. Sie kann aber auch periodisch mit ihrem gesamten Rauminhalt arbeiten.

Der Dauerbetrieb wird dadurch ermöglicht, daß der Behälter mittels perforierten Scheidewänden in Kammern und Unterkammern unterteilt ist, zwischen denen sich die Rottebakterien verbreiten können und in denen der Vorgang in unterschiedlichen Stufen verläuft: vom Beginn der Rotte in den Unterkammern mit frisch aufgefüllten Abfällen, bis zum Ablauf des Rotteprozeßes - in den zur Entladung des Komposts bestimmten Unterkammern, wobei der Zugang zu den Unterkammern zwecks ihrer Entladung und Beschickung sehr bequem angeordnet ist und durch die Mantelfläche des Rottebehälters erfolgt.

Die Technische Lösung der Außenwände der Raumsektionen erlaubt es die Umgrenzungsmaße des Rottebehälters und insbesondere die Ausmaße seines Querdurchschnittes zu ändern, die Umgrenzungsmaße und der Rauminhalt des Behälters sind am größten während der Arbeit der Vorrichtung, dagegen sind die Ausmaße des Behälters nach seiner Entleerung, z.B. für Transportzwecke am kleinsten und zwar infolge der Zusammenfaltung der Flügel nach innen des Behälters (Unterkammer) hin.

Gegenstand der Erfindung ist anhand eines Ausführungsbeispiels in beigefügter Zeichnung dargestellt.

Es zeigen:

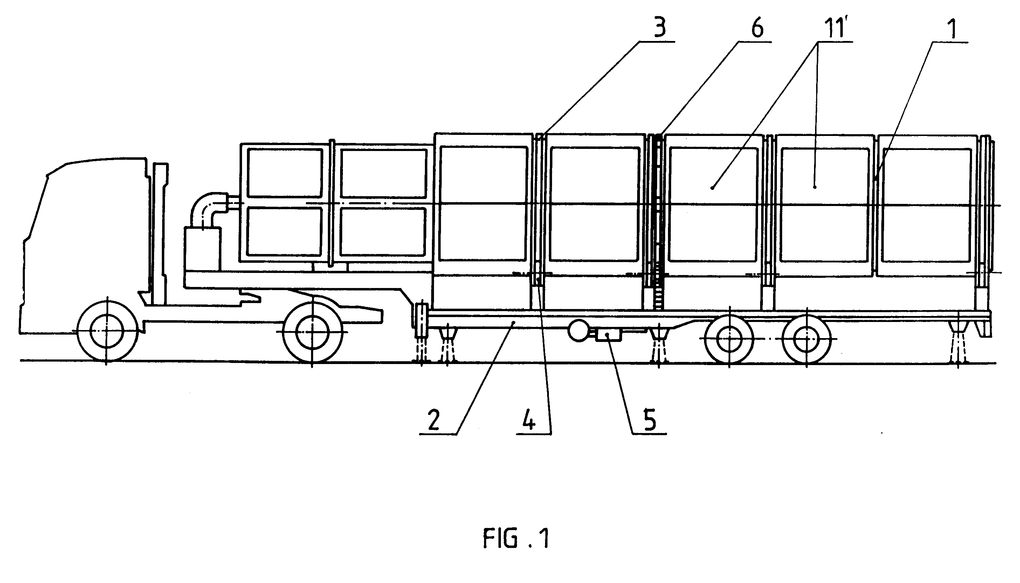

- Zeichnung 1 -: Vorrichtung in Seitenansicht

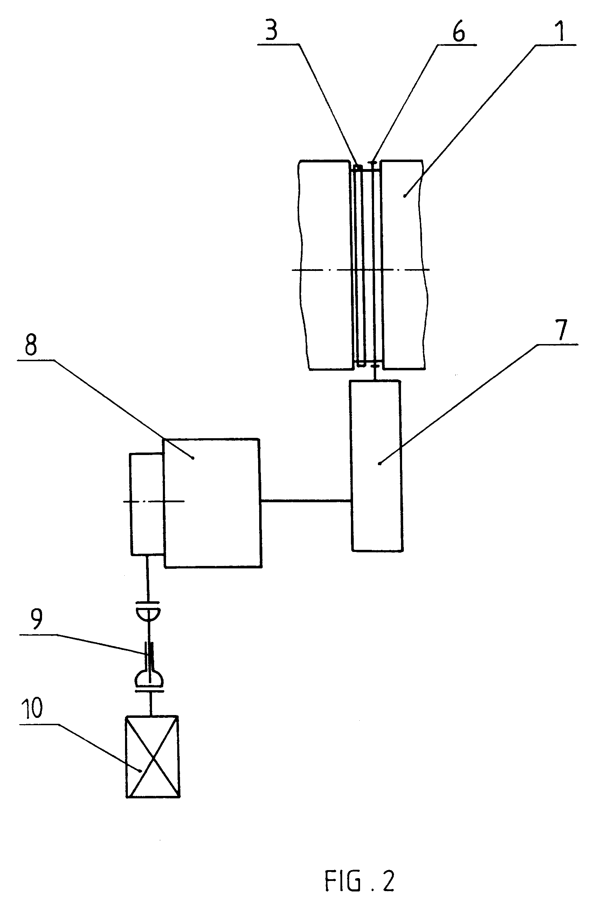

- Zeichnung 2 -: Antrieb der Drehung des Rottebehälters

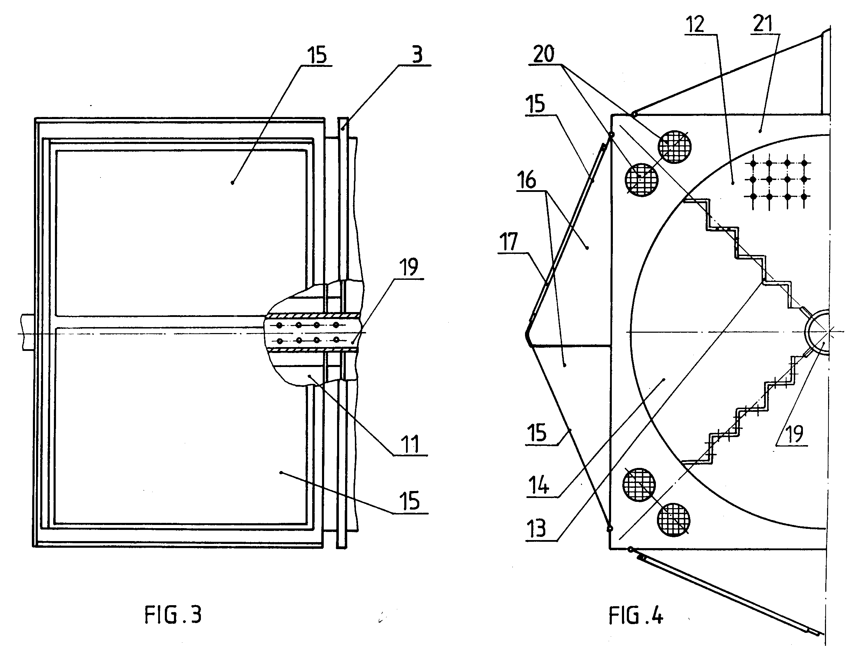

- Zeichnung 3 -: Kammer der zum Transport vorbereiteten Vorrichtung in Seitenansicht mit Teilansicht
- Zeichnung 4 -: Rottebehälter in Querdurchschnitt in einer zwischen den Kammern verlaufenden Ebene

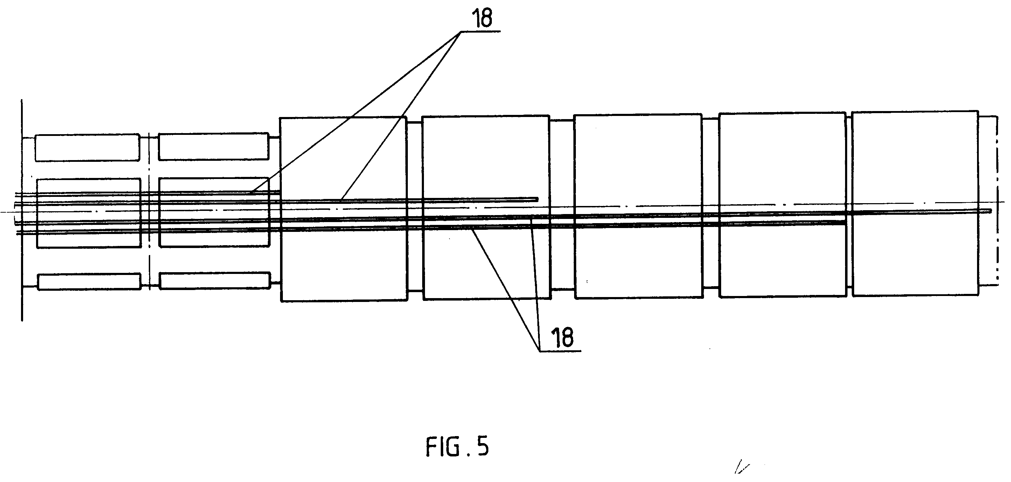

- Zeichnung 5 -: Anordnung der Wasserrohre im Rottebehälter

Der Rottebehälter 1, ist drehbar auf dem Kraftfahrzeugauflieger 2, mittels ihn umschlingenden Bahnen 3, aufgesetzt, die auf Rollen 4, abgestützt sind und an die Aufliegerkonstruktion 2, befestigt sind.

Der Antrieb 5, der Drehung des Rottebehälters 1, ist zusammengestellt aus dem den Rottebehälter 1, umschlingenden Zahnkranz 6, welcher mit dem Zahnrad am Ausgang des Stirnradgetriebes 7 verzahnt ist, das mit dem Schnecken und Umlaufgetriebe 8 verbunden, welches über das Kardangelenk 9, mit der Motorwelle 10, verbunden ist. Der Antrieb 5, verleiht dem Rottebehälter 1, eine Umlaufgeschwindigkeit von mehreren Umdrehungen pro Stunde, wobei je nach den technologischen Bedürfnissen der Kompostierung können die Umdrehungen durchgeführt kontinuierlich oder mit Unterbrechungen durchgeführt werden. Der Rottebehälter 1, ist in Querrichtung mit perforierten Scheidewänden 12, in Kammern 11, Unterteilt, welche bei der Drehung des Rottebehälters 1, verhindern, daß die Beschickungen - in bedeutenden Mengen - aus den einzelnen Kammern 11, vermischt werden, dagegen ermöglichen Diese, daß eine Durchdringung der Rottebakterien zwischen den Kammern stattfindet, wodurch der Rotteprozeß der Abfälle kontinuierlich verläuft, obwohl er in den einzelnen Kammern 11, unterschiedlich fortgeschritten ist, was eben die wesentliche Bedingung einer Kontinuierlichkeit der Arbeit der Vorrichtung darstellt. Die Perforation der Scheidewände 12, ermöglicht auch die gasförmigen Bedingungen in allen Kammern 11, und insbesondere die Luftfeuchtigkeit und die Temperatur auszugleichen.

Jede der Kammern 11, des Rottebehälters 1, ist mittels perforierten konvergent in Richtung der Längsachse des Rottebehälters 1, verlaufenden Scheidewänden 13, in vier Unterkammern 14, unterteilt. Die Perforation der Scheidewände 13, ebenso wie die der Scheidewände 12, begünstigt die Vereinheitlichung der gasförmigen Bedingungen und die Ausbreitung der Rottebakterien und in dem die Kammer 11, in kleinere Unterkammern unterteilt wird, wird die Verrottung der Beschickung beschleunigt, die in kleineren Portionen gemischt wird. Auf den Verlauf des Rotteprozeßes in den Unterkammern haben ebenfalls einen günstigen Einfluß die treppenartig angeordneten Scheidewände 13, welche parallel zur Längsachse des Rottebehälters 1, verlaufen und eine heftige Verlagerung der Beschickungsmasse bewirken.

Jede Unterkammer 14, hat eine Außenwand, die als zwei Flügeln ausgeführt ist und deren Seitenwände 16, geformt sind.

Jeder der Flügel ist an einer Seite an die Konstruktion des Rottebehälters 1, drehbar befestigt, während die gegenüberliegenden Seiten dieser Flügel verbunden sind, und mittels einer lösbaren Verbindung unbeweglich gemacht sind.

Die gesamte Länge beider Flügel 15, ist größer als die Entfernung zwischen den Achsen ihrer drehbaren Befestigungen die parallel zur Längsachse des Rottebehälters 1, verlaufen wodurch jede Kammer 11, bei einer beladenen Rottetrommel 1, einen Querschnitt deren Umriß einem Achteck entspricht. Sind alle Flügel 15, nach innen des Rottebehälters 1, hin zusammengefaltet, z.B. beim Transport der leeren Vorrichtung dann hat jede von den Kammern einen Querschnitt mit quadratischen Umriß - gebildet mittels einer Linie, welche die Achsen der Befestigungen der Flügel 15, verbindet.

In einem Flügel 15, jeder Unterkammer 14, ist eine Be- und Entladungsöffnung vorgesehen, die mit einem schwenkbaren Deckel 17, versehen ist. In dem Rottebehälter 1, sind Wasserrohre 18, eingeführt, deren Mündungen sind - an den Enden und den Mantelflächen - an verschiedenen Stellen entlang dem Rottebehälter 1, angeordnet.

Wasser wird der Masse über die Rohre zugeführt 18, die einer Verrottung unterzogen wird. Innerhalb des Rottebehälters 1, ist koaxial zum Behälter und durch alle Kammern 11, verlaufend ein perforiertes Belüftungsrohr 19, untergebracht. Das Belüftungsrohr 19, ist an der einen Seite verschlossen, und das andere Ende des nach außen hinausragenden Rohres, ist mit einer drehbaren Verbindung versehen, die zum Anschluß an ein Luftabsaugaggregat dient. Bei einem übermäßigen Temperaturanstieg im Rottebehälter 1, wird das Innere des Behälters mittels diesem Aggregat durchlüftet, und somit abgekühlt bzw. nach Bedarf aufgewärmt, und die Luft dringt in das Innere durch die Abluftöffnungen 20, hinein, die in den an die Kammern 11, angrenzenden Konstruktionsteilen 21, ausgeführt sind.

Innerhalb des Rottebehälters 1, sind Feuchte und Temperaturfühler untergebracht, an welche die Verdrahtung über die drehbare Verbindung und das Belüftungsrohr 19, eingeführt ist. Die in der Zeichnung dargestellte Vorrichtung zur Kompostierung als Ausführungsbeispiel der Erfindung, umfaßt alle Merkmale der Erfindung und enthält außerdem zusätzlich zwei zylindrische Kammern, mit denen es ermöglicht wurde, den Raum wirtschaftlich zu nutzen, welcher in Hinsicht auf die Umgrenzungsmaße des Aufliegers und die Verkehrsordnung keine weiteren erfindungsgemäßen Kammern enthält.

## Patentansprüche

1. Vorrichtung zur Kompostierung von organischen Abfällen, insbesondere aus Hauswirtschaften, mit einem Rottebehälter (1), der auf einem Fahrzeug (2) drehbar befestigt und mit einem Antrieb (5) ausgestattet ist, dadurch gekennzeichnet, daß der Rottebehälter mittels senkrecht zu seiner Drehachse (19) angeordneter, perforierter Scheidewände (12) in Richtung der Drehachse in Kammern (11) unterteilt ist, wobei jede Kammer mittels perforierter, konvergent in Richtung der Drehachse verlaufender Scheidewände (13) in Umfangsrichtung des Rottebehälters angeordnete Unterkammern (14) unterteilt ist, wobei jede Unterkammer zwei in radialer Richtung um Drehachsen klappbar außen am Rottebehälter befestigte, mit Seitenwänden (16) versehene Flügel (15) aufweist, die mit ihren freien, den Drehachsen gegenüberliegenden Enden mittels einer lösbaren Verbindung mit einander verbunden, jeweils eine Unterkammer abdeckend die Außenwand des Rottebehälters bilden, und wobei die Gesamtlänge beider Flügel größer als der Abstand zwischen den Drehachsen ihrer klappbaren Befestigungen ist.

2. Vorrichtung zur Kompostierung nach Anspruch 1, dadurch gekennzeichnet, daß der Rottebehälter drehbar auf dem Fahrzeug befestigt ist, mittels diesen umschlingenden auf Rollen 4, gestützten Bahnen, welche mit der Konstruktion des Fahrzeuges verbunden sind.

3. Vorrichtung zur Kompostierung nach Anspruch 1, dadurch gekennzeichnet, daß der Antrieb der Drehung des Rottebehälters zusammengestellt ist aus dem Rottebehälter umschlingenden Zahnkranz 6, welcher mit dem Zahnrad am Ausgang des Stirnradgetriebes 7, verzahnt und mit dem Schnecken und Umlaufgetriebe 8, verbunden ist, welches am Eingang mit der Motorwelle 10, verbunden ist.

4. Vorrichtung zur Kompostierung nach Anspruch 1, dadurch gekennzeichnet, daß die Scheidewände 13, welche die Kammern in Unterkammern unterteilen, als Treppen ausgestaltet sind, die parallel zur Längsachse des Rottebehälters verlegt sind.

5. Vorrichtung zur Kompostierung nach Anspruch 1, dadurch gekennzeichnet, daß zumindest in einem Flügel jeder Unterkammer eine Öffnung vorgesehen ist, die mit einem Deckel 17, versehen ist.

6. Vorrichtung zur Kompostierung nach Anspruch 1, dadurch gekennzeichnet, daß die Drehachsen der Flügel 15, parallel zur Längsachse des Rottebehälters sind.

7. Vorrichtung zur Kompostierung nach Anspruch 1, dadurch gekennzeichnet, daß in dem Rottebehälter Wasserrohre 18, eingeführt sind deren Mündungen an verschiedenen Stellen entlang dem Rottebehälter angeordnet sind.

8. Vorrichtung zur Kompostierung Nach Anspruch 1, dadurch gekennzeichnet, daß innerhalb des Rottebehälters, koaxial zu diesem, und durch alle Kammern ein perforiertes Belüftungsrohr 19, verläuft das mit seinem einem Ende nach Außen hinausgeführt wird.

9. Vorrichtung zur Kompostierung nach Anspruch 1, dadurch gekennzeichnet, daß in jede Kammer zumindest eine Abluftöffnung 20, von außen her führt.

10. Vorrichtung zur Kompostierung nach Anspruch 1, dadurch gekennzeichnet, daß in jedem Rottebehälter Feuchtigkeit und Temperaturfühler angebracht sind.

## Claims

1. A device used for composting organic waste, thus mostly domestic ones, with a modular drum (1) affixed to a vehicle (2) so that it can rotate and equipped with a drive (5). The modular drive is unique in that it is subdivided through perforated bulkheads (12) into chambers (11) arranged in the direction, of the rotational axis(19). These bulkheads are arranged vertically to the rotational axis. Each chamber is subdivided again into subchambers (14) through perforated bulkheads (13) converging to the rotational axis. Each subchamber has two folding blades (15) equipped with side walls (16). The blades are attached in a radial direction by rotational axis to the modular drum. The blades which form an external wall of the modular drum by covering one subchamber respecively, have lose ends connected to each other through a detachable link. The overall length of both blades is greater than the distance between the rotational axis of the fixing of the blades.

2. A device for composting as in claim 1., unique in that the modular drum is affixed to the vehicle so that it can rotate. The affixing occurs through clasping rings, supported on rolls (4), attached to the construction of the vehicle.

3. A device for composting as in claim 1., unique in that the rotation drive of the modular drum is put together out of clasping toothed wheel rim (6) which is connected to the spur gear (7), cone drive and circulation gear (8) which is connected to the engine shaft (10).

4. A device for composting as in claim 1., unique in that the bulkhead (13) which subdivides the chambers into subchambers are designed as steps running parallel to longitudinal axis of the modular drum.

5. A device for composting as in claim 1, unique in that there is an opening with a cover (17) in at least one blade of each subchamber.

6. A device for composting as in claim 1, unique in that the rotational axes of the blades (15) are arranged parallel to the longitudinal axis of the modular drum.

7. A device for composting as in claim 1, unique in that water pipes (18) are inserted into the modular drum. Their ends are placed at different points inside the modular drum.

8. A device for composting as in claim 1, unique in that a perforated ventilation pipe (19) runs through all chambers, coaxially to the modular drum. One end of the pipe is led to the outside.

9. A device for composting as in claim 1, unique in that each chamber is equipped with one air outlet (20).

10. A device for composting as in claim 1, unique in that there is a moisture content and a temperature sensor in each and every modular drum.

## Revendications

1. L'équipement de compostage de déchets organiques, spécialement d'origine ménagère, avec un réservoir de digestion (1) pivotant, fixé sur un véhicule et équipé d'un système d'entraînement, le réservoir de digestion se caractérisant par la division en chambres (11) réparties en direction de l'axe de rotation, (19) au moyen de cloisons perforés (12), disposés verticalement à son axe de rotation, chaque chambre ayant elle-même une soubdivision en sous-chambres (14), disposées vers la direction circonférentielle du réservoir de digestion, au moyen de cloisons perforés (13), allant convergent en direction de l'axe de rotation, chacune des sous-chambres possédant deux ailes (15), fixées à l'extérieur du réservoir de digestion, pliables en direction radiale autour des axes de rotation, munies de parois latérales (16), étant rejoint l'un à l'autre ,de façon amovible ,par leurs bouts libres se trouvant à l'opposé des axes de rotation, recouvrant une sous-chambre respective, de façon qu'ils constituent la paroi extérieure du réservoir de digestion, la longuer totale de deux ailes étant plus grande que la distance entre les axes de rotation de leurs attaches pliables.

2. L'équipement de compostage selon la révendication 1 dont le caractéristique est que le réservoir est fixé pivotant sur un véhicule au moyen des trajectoires s'appuyant sur des rouleaux (4) qui enroulent celui-ci, intégrés à la construction du véhicule.

3. L'équipement de compostage selon la révendication 1 se caractérisant par un système d'entraînement de la rotation du réservoir de digestion se composant de la couronne dentée (6) enroulante le réservoir de digestion, endentée à la sortie de l'engrenage cylindrique (7) avec la roue dentée, et liée avec le vis et le réducteur planétaire (8) étant liés à l 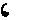 entrée avec l'arbre moteur (10).

4. L'équipement de compostage selon la révendication 1 se caractérisant par les cloisons (13) soubdivisant les chambres et les sous- chambres, construits en forme d'escalier, situé parallelement à l'axe longitudinal du réservoir de digestion.

5. L'équipement de compostage selon la révendication 1 dont le caractéristique est qu'un orifice muni d'un couvercle (17)est prévu ,au minimum dans l 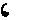 une des ailes de chacune des sous-chambres.

6. L'équipement de compostage selon la révendication 1 se caractérisant par les axes de rotation des ailes (15) étant situés parallelement à l'axe longitudinal du réservoir de digestion.

7. L'équipement de compostage selon la révendication 1 se caractérisant par les tuyaux d'eau (18), introduits dans le réservoir de digestion, débouchant sur différents lieux répartis le long du réservoir de digestion.

8. L'équipement de compostage selon la révendication 1 se caractérisant par un tuyau de ventilation (19) perforé, situé à l'intérieur du réservoir de digestion placé coaxial à celui-ci , passant à travers toutes les chambres, dont l'éxtrémité mène à l'extérieur.

9. L'équipement de compostage selon la révendication 1 dont le caractéristique est, qu' au minimun un trou d'aération (20) menant de l'extérieur se trouve dans chaque chambre.

10. L'équipement de compostage selon la révendication 1 se caractérisant par la sonde d'humidité et de tempétature placées dans chaque réservoir de digestion.
